# DEMANDE DE BREVET EUROPEEN

(11) **EP 0 654 631 A1**
(43) Date de publication de la demande: **24.05.1995**
(21) Numéro de dépôt: 94402638.4
(22) Date de dépôt: 18.11.1994
(51) Int. Cl.: F16L 55/40, F16L 55/48, F16L 55/30

(54) **Appareil d'inspection de l'état physique de canalisations accessibles ou visitables par l'homme**

(30) Priorité: 18.11.1993 FR 9313790
(71) Demandeur: CONSEIL GENERAL DU VAL DE MARNE, F-94000 Creteil (FR); ETUDES PRODUCTION SCIENTIFIQUES ET INDUSTRIELLES - E.P.S.I., F-92140 Clamart (FR)
(72) Inventeur: Dubreucq, Francois, F-93240 Stains (FR); Quedillac, Philippe, F-94470 Boissy-Saint-Légèr (FR); Maleville, Gérard, F-91370 Verrieres le Buisson (FR)
(74) Mandataire: Durand, Yves Armand Louis

(57) **Abrégé**

La présente invention concerne un appareil d'inspection de l'état physique de canalisations non accessibles ou visitables par l'homme.

L'appareil de l'invention est constitué d'un chariot (1) mobile en translation dans une canalisation (2), télé-commandé de l'extérieur, comportant notamment une console (6) montée rotative autour d'un axe longitudinal (7) à l'avant du chariot et supportant un dispositif d'exploration (90, 90') sélectivement mobile entre une position rétractée sur la console et une position déployée du contact de la paroi interne de la canalisation, ladite console étant pourvue d'un moyen de détection (85b, 86b) de la position relative actuelle du dispositif d'exploration.

L'invention est destinée notamment à l'inspection des réseaux d'assainissement urbains.

## Description

La présente invention concerne un appareil d'inspection de l'état physique de canalisations non accessibles ou visitables par l'homme, notamment de réseaux d'assainissement urbains.

Dans ces réseaux, il est indispensable de surveiller l'état physique des canalisations, notamment des collecteurs, afin de prévenir toute défaillance du réseau et d'effectuer les travaux d'entretien et de restauration nécessaires.

Parmi les défaillances généralement rencontrées dans les réseaux d'assainissement, on peut citer notamment l'obstruction des canalisations, la fuite d'effluents circulant dans les canalisations vers l'extérieur ou l'infiltration de matière extérieure dans les canalisations suite à une fissuration de ces dernières, et une déformation ou une rupture mécanique des canalisations.

Dans les réseaux d'assainissement, on distingue généralement deux catégories de canalisations.

Une première catégorie de canalisations est directement accessible et visitable par l'homme, ce qui permet à un opérateur humain d'inspecter visuellement l'état général de ces dernières et de manipuler des outils adaptés pour obtenir des informations spécifiques concernant la structure et l'environnement géotechnique de ces canalisations.

L'obtention de ces informations est nécessaire pour l'établissement d'un diagnostic fiable de l'état physique des canalisations et constitue une condition préalable à tous travaux de restauration ou d'entretien.

La seconde catégorie de canalisations n'est pas directement accessible ou visitable par l'homme.

Il est connu d'inspecter cette seconde catégorie de canalisations au moyen de chariots mobiles en translation, télécommandés de l'extérieur, notamment par l'intermédiaire de câbles de transmission et qui comportent au moins une caméra et un projecteur dirigés vers l'avant du chariot pour visualiser des obstacles à sa progression et l'état de la canalisation à inspecter, et un ensemble moteur pour entraîner notamment ledit chariot en translation.

Les chariots décrits ci-dessus nécessitent une miniaturisation des outils habituellement manipulés par un opérateur humain, du fait que les canalisations à inspecter présentent un diamètre interne réduit, généralement compris entre 200 et 600 mm.

Actuellement, les chariots destinés à inspecter cette catégorie de canalisations ne disposent que de caméras de dimensions réduites, telles que des "caméra-stylos".

Cependant, l'inspection télévisuelle ne permet pas d'obtenir toutes les informations nécessaires à l'établissement d'un diagnostic fiable, telles que par exemple les caractéristiques géométriques et mécaniques des canalisations, les caractéristiques de l'interface entre le sol et les canalisations, la localisation et la quantification des défaillances dans la canalisation et/ou dans son environnement.

L'inspection de la seconde catégorie de canalisations est rendue encore plus difficile par le fait que des effluents agressifs et corrosifs circulent généralement dans les canalisations, que le milieu régnant à l'intérieur de ces dernières est humide, et que les canalisations sont généralement fabriquées en béton, en grès, en amiante-ciment ou en béton armé.

Bien que l'invention est décrite en liaison avec l'inspection de réseaux d'assainissement, il est bien évident qu'elle n'y est nullement limitée et qu'elle peut s'appliquer à tout type de canalisations qui n'est pas directement accessible ou visitable par l'homme et qui nécessite une inspection précise de son état physique.

La présente invention a pour but d'éliminer les inconvénients précités et de proposer un appareil d'inspection de l'état physique des canalisations permettant d'obtenir suffisamment d'informations à son sujet pour établir un diagnostic fiable de celui-ci.

La présente invention a pour objet un appareil d'inspection de l'état physique de canalisations non accessibles ou visitables par l'homme, notamment de réseaux d'assainissement, constitué d'un chariot mobile en translation dans une canalisation à inspecter, télécommandé de l'extérieur, notamment par l'intermédiaire de câbles de transmission, et qui comporte au moins une caméra et un projecteur dirigés vers l'avant du chariot pour visualiser les obstacles à sa progression et l'état général du collecteur, et un ensemble moteur pour entraîner notamment ledit chariot en translation, caractérisé en ce qu'une console, notamment en porte-à-faux, est montée rotative autour d'un axe longitudinal à l'avant du chariot et supporte un dispositif d'exploration sélectivement mobile entre une position rétractée sur ladite console et une position déployée de contact avec la paroi interne de la canalisation à inspecter, ladite console étant pourvue d'un moyen de détection pour détecter la position relative actuelle du dispositif d'exploration, notamment lorsqu'il est dans sa position déployée, et en ce que l'appareil d'inspection comporte un système extérieur de commande et de contrôle du chariot et une unité centale de traitement des informations transmises par le dispositif d'exploration.

Selon un premier mode de réalisation particulier de l'invention, le dispositif d'exploration est constitué avantageusement d'une antenne de radar de dimensions réduites amoviblement couverte par un élément de protection mécanique perméable aux ondes électromagnétiques du côté de la paroi interne de la canalisation à inspecter.

L'antenne de radar permet notamment de détecter la présence d'armatures métalliques, de vides ou de fissures dans la paroi de la canalisation et de déterminer les caractéristiques de l'interface sol/canalisation et du sol.

Selon un deuxième mode de réalisation particulier de l'invention, le dispositif d'exploration est constitué d'un organe vibratoire, tel qu'un marteau et d'un accéléromètre, ledit organe vibratoire comportant une masselotte apte à venir frapper la paroi interne de la canalisation lorsque le dispositif d'exploration est dans sa position déployée.

Selon une caractéristique particulière de l'invention, le moyen de détection précité est constitué d'au moins une deuxième caméra et un deuxième projecteur dirigés vers le dispositif d'exploration de manière à pouvoir le visualiser sur au moins une portion de sa course incluant sa position déployée.

L'appareil d'inspection selon l'invention est avantageusement caractérisé par un moyen de déplacement sélectif du dispositif d'exploration, constitué de bras agencés en parallélogrammes articulés autour d'axes perpendiculaires audit axe longitudinal, pour rétracter et déployer le dispositif d'exploration.

Selon une autre caractéristique de l'invention, le dispositif d'exploration est logé sur un plateau qui est supporté élastiquement par exemple au moyen de ressorts hélicoïdaux, par ledit moyen de déplacement sélectif.

Ce plateau peut comporter des tiges formant capteurs qui font saillie de sa face inférieure, de sorte que leur déplacement soit détecté au moins partiellement par ledit moyen de détection.

Selon encore une autre caractéristique de l'invention, le chariot comprend un système à pendule formant balancier permettant de mesurer l'inclinaison transversale du chariot par rapport à la verticale pendant son déplacement.

L'ensemble moteur précité comprend avantageusement trois moteurs électriques pour commander respectivement la locomotion du chariot, la rotation de la console et le déplacement sélectif du dispositif d'exploration.

Dans un mode particulièrement avantageux de l'invention, la console est munie d'une batterie d'accumulateur électrique indépendante pour alimenter le moteur électrique de commande en rétractation automatique du moyen de déplacement sélectif notamment lors d'une rupture accidentelle de l'alimentation générale en énergie du chariot.

Le corps principal du chariot est avantageusement constitué de deux parties pouvant coulisser l'une par rapport à l'autre dans la direction longitudinale du chariot, ce qui permet de faire varier l'empattement du chariot.

Dans le cas où le roulement du chariot est assuré par deux paires de roues entraînées par l'intermédiaire d'une courroie sans fin, il est possible de mettre en tension cette courroie en écartant lesdites parties du châssis l'une par rapport à l'autre.

Le chariot peut comporter des butées de fin de course pour limiter la rotation de la console à environ un demi-tour de part et d'autre d'une position initiale prédéterminée de ladite console.

L'appareil selon l'invention comporte avantageusement des moyens de réglage de la position verticale de l'arbre de rotation de la console par rapport au corps principal du chariot.

Le réglage principal de la position verticale de l'axe de rotation de la console est effectué avantageusement en faisant varier le diamètre des roues du chariot, alors que le moyen de réglage précité constitue plutôt un réglage fin de ladite position verticale.

Selon une autre caractéristique de l'invention, la caméra qui est dirigée vers l'avant du chariot, est avantageusement coaxiale avec ledit axe longitudinal de rotation de la console, ce qui permet d'obtenir sur l'écran d'affichage extérieur une représentation linéaire de la progression du chariot dans la canalisation.

Dans une variante de réalisation de l'invention, l'appareil peut comporter en outre des sondes de diagraphie nucléaire embarquées sur le chariot pour détecter des variations de densité et d'humidité de matériaux extérieurs à la canalisation, notamment pour détecter des fuites d'effluents vers l'extérieur des canalisations.

L'appareil selon l'invention comporte avantageusement au moins un tambour de stockage extérieur à la canalisation à inspecter autour duquel vient s'enrouler le câble de transmission du chariot et/ou du dispositif d'exploration, un dispositif compte-tours étant monté sur au moins un tambour pour mesurer la distance parcourue par le chariot lors de sa progression dans la canalisation à inspecter et permettre de localiser les défaillances éventuelles de celle-ci.

L'invention sera mieux comprise et d'autres buts, caractéristiques et avantages de celle-ci apparaîtront plus clairement au cours de la description explicative suivante, donnée uniquement à titre d'exemples purement illustratifs et non limitatifs de plusieurs modes de réalisation particuliers actuellement préférés de l'invention, représentés sur les dessins annexés dans lesquels.

La figure 1 est une vue schématique en perspective du chariot selon un premier mode de réalisation de l'invention, lorsque ce dernier est dans une canalisation.

La figure 2a est une vue schématique en élévation latérale et en coupe de la partie postérieure du chariot de la figure 1, suivant la ligne IIa-IIa de la figure 2b.

La figure 2b est une vue schématique de dessus de la figure 2a.

La figure 3a est une vue schématique en élévation latérale et en coupe de la partie antérieure du chariot de la figure 1, suivant la ligne IIIa-IIIa de la figure 3b.

La figure 3b est une vue schématique du dessus et partiellement en coupe de la figure 3a.

La figure 4 est une vue schématique en section transversale, suivant la ligne IV-IV de la figure 3b, lorsque le chariot est dans la canalisation.

La figure 5 est une vue schématique et en coupe transversale du câble de transmission principal reliant le chariot à l'extérieur.

La figure 6a est une vue schématique en élévation latérale et en coupe de la partie arrière de la console du chariot de la figure 1, suivant la ligne VIa-VIa de la figure 6b.

La figure 6b est une vue schématique de dessus partiellement arrachée de la figure 6a.

La figure 7a est une vue schématique en section transversale suivant la ligne VIIa-VIIa de la figure 6b.

La figure 7b est une vue schématique partielle en perspective du dispositif d'exploration en position déployée de la figure 1.

Les figures 8a et 8b sont des vues schématiques respectivement en élévation latérale partiellement en coupe et de dessus de la partie avant de la console de la figure 1.

La figure 9 est une vue schématique en section transversale d'un autre mode de réalisation du dispositif d'exploration de l'invention.

La figure 10 est un schéma synoptique fonctionnel de l'appareil de l'invention.

On a représenté sur les différentes figures du dessin uniquement les parties essentielles à la compréhension de l'appareil.

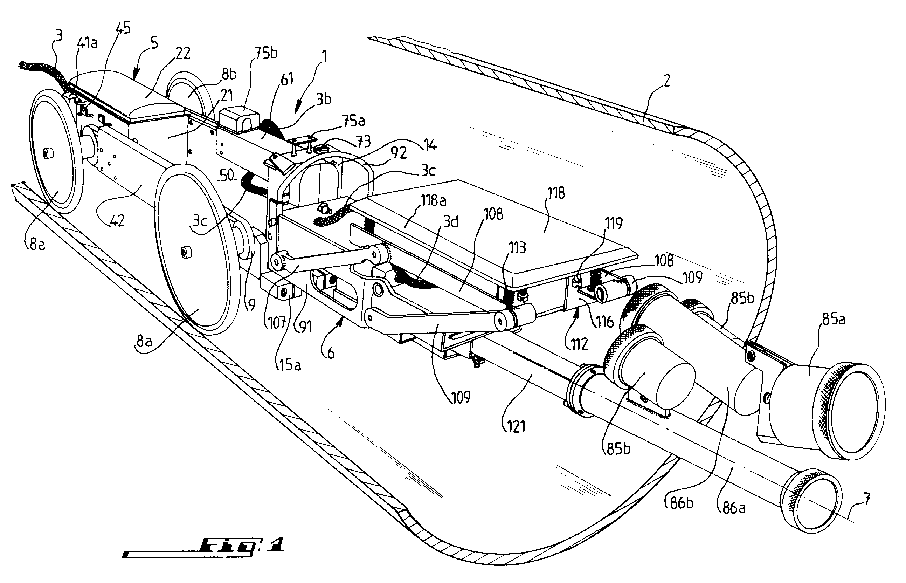

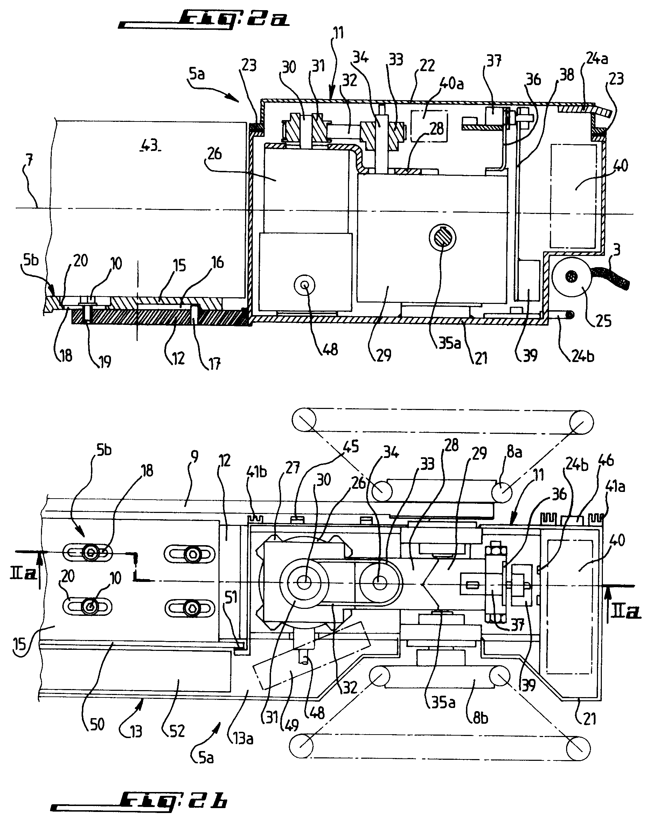

La figure 1 représente un chariot 1 mobile en translation dans une canalisation partiellement arrachée 2.

Le chariot 1 est relié par l'intermédiaire d'un câble de transmission principal 3 à un système extérieur de commande et contrôle 4 représenté sur la figure 10.

Le chariot 1 est constitué d'un corps principal 5 qui s'étend dans une direction longitudinale et d'une console en porte-à-faux 6 montée rotative autour d'un axe longitudinal 7 à l'avant du corps principal 5.

On va maintenant décrire en détail le corps principal 5 du chariot 1 en référence aux figures 1 à 4.

Le corps principal 5 est supporté par deux paires de roues 8a et 8b disposées de part et d'autre de la direction longitudinale du corps principal 5, les roues de l'une desdites paires 8a étant mutuellement entraînées par l'intermédiaire d'une courroie sans fin 9. La section transversale de la courroie 9 peut être avantageusement trapézoïdale.

Le corps principal 5 est constitué de deux parties 5a et 5b réglables l'une par rapport à l'autre dans la direction longitudinale 7 et reliées par l'intermédiaire de vis de serrage 10.

La partie postérieure 5a du corps principal 5 est constituée d'un carter 11 qui se prolonge vers l'avant par son extrémité inférieure par une petite plaque plane 12 et d'un boîtier 13 qui s'étend dans la direction longitudinale 7 le long d'un des côtés du chariot 1 qui est opposé au côté de la courroie 9.

La partie antérieure 5b du corps principal 5 est constituée d'un bâti 14 supporté levable sur une grande plaque plane 15.

Un évidement borgne longitudinal 16 est ménagé dans la face inférieure de la grande plaque 15, ledit évidement 16 étant apte à recevoir l'extrémité d'un ergot 17 logé dans un trou de la plaque 12 et qui fait saillie de sa face supérieure.

L'évidement 16 est disposé dans une direction longitudinale et au centre de la grande plaque 15 pour faciliter son centrage avec la petite plaque 12.

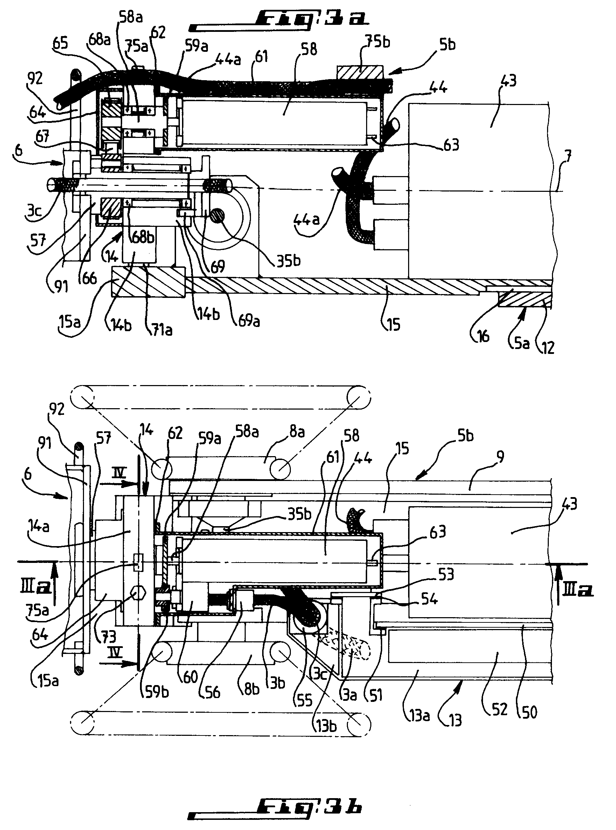

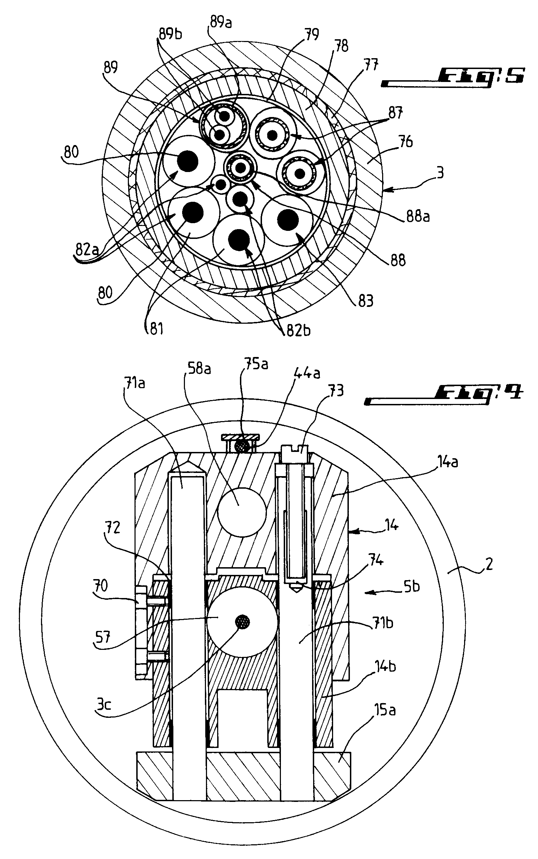

On voit sur les figures 2a et 2b que des lumières oblongues 18, au nombre de quatre, sont ménagées à travers l'épaisseur de la grande plaque 15, en regard de trous taraudés 19 ménagés à travers la petite plaque 12.

La tête des vis de serrage 10 prend appui sur un lamage 20 ménagé autour des lumières oblongues 18 sur la face supérieure de la grande plaque 15, de manière à pouvoir serrer les deux plaques 12 et 15 l'une contre l'autre par vissage de la tige filetée des vis de serrage 10 dans chaque trou taraudé 19.

Il est donc possible de régler la position relative des deux plaques 12 et 15 dans la direction longitudinale en faisant coulisser les vis de serrage 10 dans les lumières 18.

Il est possible de mettre en tension la courroie 9 en écartant lesdites parties 5a et 5b l'une par rapport à l'autre, étant donné que la paire de roues 8a comporte une roue montée sur chacune desdites parties 5a et 5b.

Le carter 11 est constitué d'un châssis 21 fermé de manière étanche par un couvercle 22.

Les extrémités périphériques supérieure et inférieure respectivement du châssis 21 et du couvercle 22 comportent un rebord marginal plan apte à venir serrer un joint d'étanchéité périphérique 23.

Le couvercle 22 comporte à l'arrière une patte 24a qui fait saillie et qui est destinée à être accrochée à un cordage formant élingue (non représentée sur le dessin) pour descendre ou monter le chariot 1 dans la canalisation 2.

Une moitié d'anneau 24a fait saillie à l'arrière du châssis 21 et peut également servir à l'accrochage d'un cordage pour la descente ou la montée du chariot 1.

Une prise étanche externe 25 de réception du câble principal 3 est fixée à l'arrière du châssis 21.

Le câble principal 3 est connecté à l'ensemble de la filerie du chariot 1.

A l'intérieur du carter 11 est monté un moteur électrique 26 destiné à commander la locomotion du chariot 1.

Le moteur électrique 26 présente à sa périphérie des conducteurs formant charbon 27 et il est relié par l'intermédiaire d'une platine 28 à un mécanisme de réduction 29.

L'arbre 30 du moteur électrique 26 est logé dans une première poulie 31 qui entraîne par l'intermédiaire d'une courroie sans fin 32 une deuxième poulie 33 dans laquelle est solidairement logé un arbre 34.

L'arbre 34 entraîne en rotation, par l'intermédiaire d'un ensemble d'engrenages réducteurs, non représentés sur le dessin, un essieu 35a qui relie les deux roues arrière 8a et 8b du chariot 1.

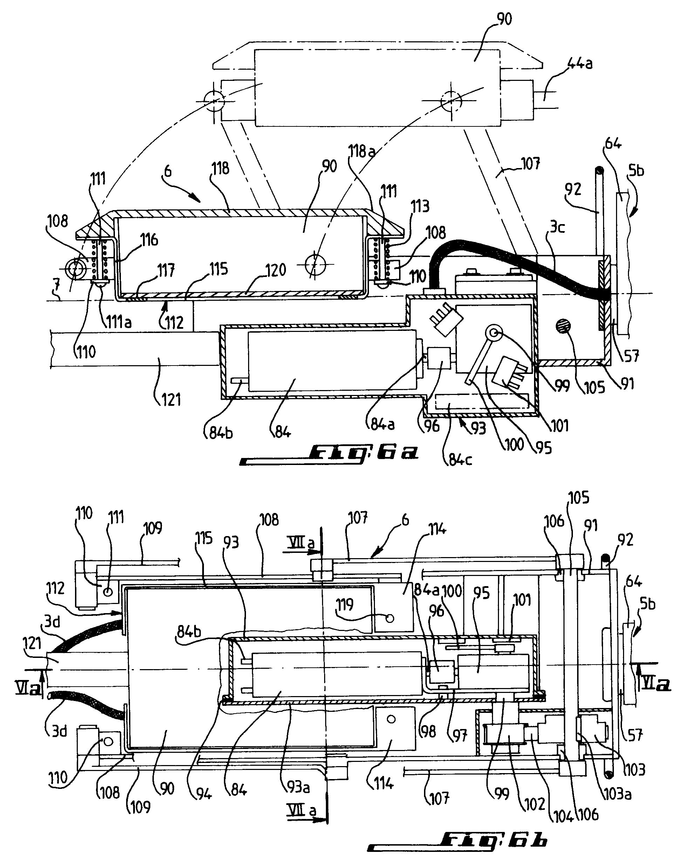

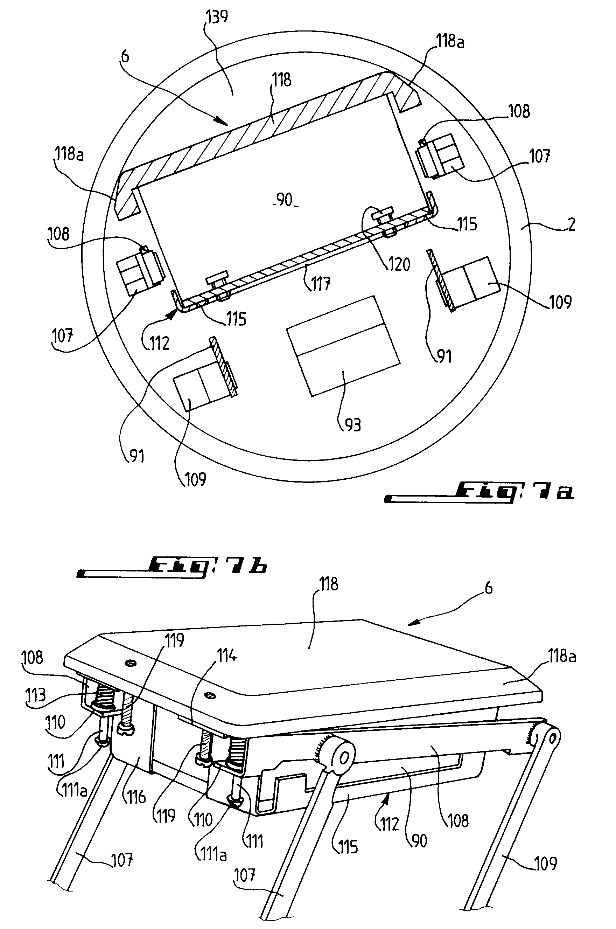

Il est possible d'utiliser des roues de différents diamètres, comme représentées en traits mixtes sur les figures 2b et 3b.

Une patte courbée 36 fixée sur le mécanisme de réduction 29 supporte un potentiomètre 37 apte à mesurer l'inclinaison angulaire par rapport à la verticale d'un pendule 38 formant balancier qui comporte un lest 39 à sa partie inférieure.

Le pendule 38 permet de détecter l'inclinaison transversale du chariot 1 à l'intérieur de la canalisation à explorer.

Une platine 40 de variation de vitesse des moteurs 26 et 58 du chariot est logée à l'arrière du carter 11, comme représentée en traits mixtes sur les figures 2a et 2b.

Des composants électroniques formant notamment codeurs 40a peuvent être logés au milieu du carter 11, comme représentés en traits mixtes sur la figure 2a.

Le carter 11 présente à l'extérieur sur l'un de ses côtés des ailettes 41a et 41b de refroidissement destinées à dissiper la chaleur produite par les différents composants électroniques. Les ailettes de refroidissement 41b sont en contact thermique avec une plaque latérale 42 de protection du chariot, représentée sur la figure 1.

On a représenté sur les figures 2a, 3a et 3b un boîtier 43 de traitement du signal supporté par la grande plaque 15 et comportant un câble coaxial 44 apte à venir se loger dans des crochets 45 ménagés en saillie de la paroi latérale extérieure du carter 11.

On a représenté un transistor 46 entre les ailettes de refroidissement 41a.

Le moteur électrique 26 est commandé par la platine 40 par l'intermédiaire de transistors de puissance non représentés sur les dessins.

A l'instar du câble principal 3, le câble coaxial 44 traîne à l'arrière du chariot 1 et est connecté à une unité centrale extérieure 47.

On a représenté la figure 2b sans le transmetteur 43 et sans le couvercle 22.

Le moteur électrique 26 comporte un fil 48 connecté sur sa paroi latérale.

On voit sur la figure 2b des composants électroniques formant notamment convertisseur numérique/analogique 49 représentés en traits mixtes, pour la commande de la platine 40.

Le carter 11 se prolonge latéralement et vers l'avant par le boîtier 13 qui est constitué par le châssis 21 fermé de manière étanche par une grande plaque de fermeture 50, par l'intermédiaire de joints d'étanchéité 51.

Le boîtier 13 comporte un compartiment supérieur 13a dans lequel est logé notamment un multiplexeur 52 et un compartiment inférieur non représenté sur le dessin traversé par un câble secondaire de transmission 3a qui est relié au câble principal 3.

Une petite plaque de fermeture 53 est reliée de manière étanche au boîtier 13 par l'intermédiaire de joints d'étanchéité 54.

Le boîtier 13 comporte à l'avant un petit compartiment 13b dans lequel est logé une prise déconnectable 55 servant à connecter le câble secondaire 3a à des câbles 3b et 3c.

Le câble 3b est connecté par l'intermédiaire d'un presse-étoupe étanche 56 au bâti 14.

La console 6 est montée rotative et en porte-à-faux sur le bâti 14, par l'intermédiaire d'un arbre creux 57, d'axe confondu avec l'axe longitudinal 7 du chariot 1.

La rotation de la console 6 est commandée par un motoréducteur électrique 58 entraînant un arbre de sortie 58a qui entraîne en rotation un grand pignon 59a coopérant avec un petit pignon 59b solidaire d'un arbre relié à un potentiomètre 60. Le motoréducteur 58 est logé dans un capot arrière 61 relié de manière étanche à la face postérieure du bâti 14 par l'intermédiaire de joints d'étanchéité 62.

Le potentiomètre 60 est connecté au câble 3b.

Le motoréducteur 58 comporte à l'arrière des fiches 63 de connexion électrique.

Un capot avant 64 est fixé sur la face antérieure du bâti 14 et comporte à l'intérieur une petite poulie 65 entraînée en rotation par l'arbre de sortie 58a du motoréducteur 58 et une grande poulie 66 entraînée en rotation par une courroie 67 qui relie les deux poulies 65 et 66.

La grande poulie 66 est apte à entraîner en rotation l'arbre creux 57 qui est traversé par le câble 3c.

Le bâti 14 comporte une première paire de roulements 68a disposée autour de l'arbre de sortie 58a du motoréducteur 58 et une deuxième paire de roulements 68b disposée autour de l'arbre creux 57.

Un plateau de butée mécanique creux 69 est monté sur la face postérieure de l'arbre creux 57.

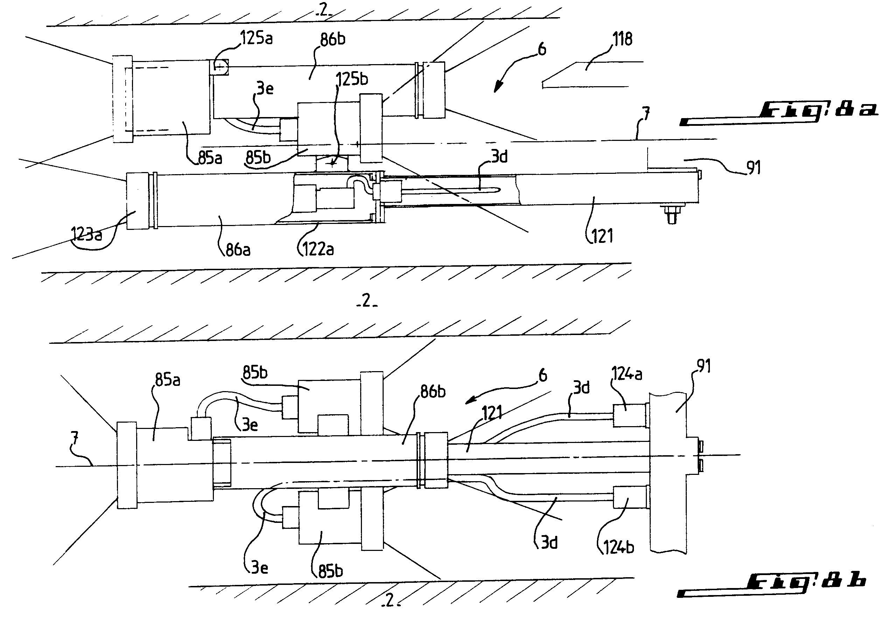

La figure 4 montre que le bâti 14 est constitué d'un bloc supérieur 14a emmanché sur un bloc inférieur 14b, ces deux blocs étant solidarisés par l'intermédiaire de vis de serrage 70.

Les deux blocs 14a et 14b sont traversés dans le sens de la hauteur par deux colonnes 71a et 71b, des bagues autolubrifiantes 72 assurant le déplacement entre les colonnes et le bâti 14.

Les colonnes 71a et 71b sont fixées par leur extrémité inférieure dans des brides de support 15a à l'avant de la grande plaque 15 et le bâti 14 peut coulisser verticalement sur ces colonnes.

Une vis de réglage 73 est montée sur la face supérieure du bloc 14a et vient se visser dans un taraudage 74 ménagé coaxialement dans la colonne 71b.

La tête de la vis de réglage 73 peut tourner sur elle-même, mais elle est bloquée verticalement par rapport au bloc 14a entre un circlips extérieur et un épaulement ménagé sur ladite vis 73 (non représentés sur le dessin).

La vis de réglage 73 permet de déplacer verticalement le bâti 14 par rapport à la grande plaque 15 et donc d'effectuer un réglage fin en position verticale de l'arbre creux 57, en vissant et dévissant la vis 73 à l'intérieur du taraudage 74.

Une plaquette 75a supportée par deux tiges minces et un portique 75b sont montés sur la face supérieure du bloc 14a pour guider un câble coaxial 44a connecté au boîtier de traitement 43.

Les roues avant 8a et 8b du chariot 1 sont mutuellement entraînées en rotation par l'intermédiaire d'un essieu 35b.

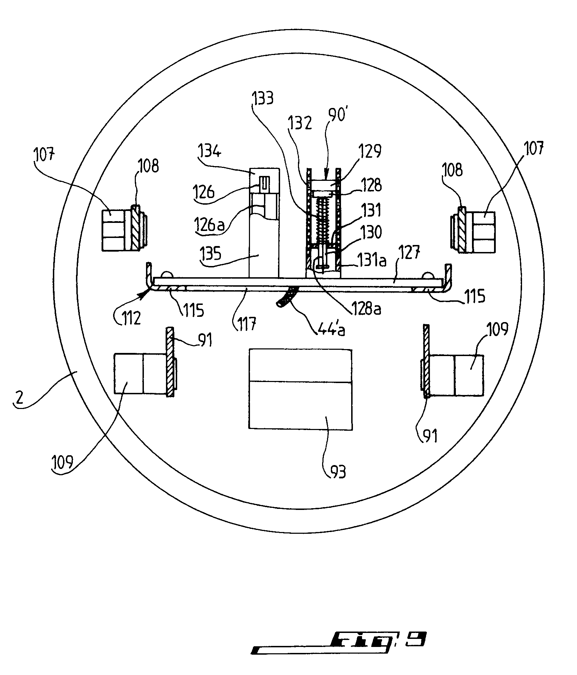

On voit sur la figure 5 les différents éléments constitutifs du câble de transmission principal 3.

La paroi du câble 3 est constituée d'une gaine extérieure de protection en polyuréthane 76, d'une couche intermédiaire de fibres de Kevlar tressées 77, d'une gaine en polychlorure de vinyle (PVC) 78 et d'un ruban intérieur en polyester 79.

Le câble principal 3 contient une pluralité de câbles qui sont tous constitués d'un fil en cuivre 80 entouré d'une gaine isolante 81 en PVC.

Parmi ces différents câbles, trois conducteurs 82a permettent d'établir une tension de référence dans le chariot 1, communément désignée par tension O volt.

Deux autres conducteurs 82b permettent d'établir dans le chariot une tension de 30 volts par rapport à la tension de référence et alimentent en énergie le moteur électrique 26 d'entraînement en translation du chariot.

Un conducteur 83 permet d'établir une tension de 24 volts dans le chariot et alimente en énergie le motoréducteur 58 d'entraînement en rotation, le multiplexeur 52, un moteur de déplacement sélectif 84, des projecteurs 85a et 85b et des caméras 86a et 86b sur la console 6.

Deux câbles coaxiaux 87 servent à transmettre les signaux émis par les caméras 86a et 86b.

Un câble 88 comporte une couche intermédiaire 88a en fils de cuivre tressés formant blindage, permettant d'établir une tension de référence dans le multiplexeur 52. Le conducteur 88 véhicule les signaux entre le multiplexeur 52 et le système extérieur 4.

Un câble 89 comporte un blindage intermédiaire 89a et deux conducteurs internes 89b qui transmettent au système extérieur 4 des signaux de position de l'antenne radar 90 montée sur la console 6 et d'inclinaison transversale du chariot 1 par rapport à la verticale.

Le plateau creux 69 comporte des protubérances formant butées mécaniques 69a coopérant avec le bloc inférieur 14b pour limiter la course angulaire de la console 6 autour de l'axe longitudinal 7 à environ un demi-tour de part et d'autre d'une position centrale de la console 6 dans laquelle l'antenne radar 90 est dirigée vers la paroi supérieure de la canalisation 2.

L'information transmise par l'antenne radar 90 étant très sensible aux parasites et autres perturbations, il est actuellement nécessaire d'utiliser un câble coaxial 44a très court pour minimiser les pertes de charge et d'embarquer sur le chariot le boîtier de traitement 43.

La course angulaire de la console 6 doit donc être limitée pour éviter que le câble coaxial 44a reliant l'antenne radar 90 à son boîtier de traitement 43 ne s'entortille autour de l'arbre de rotation 57 et surtout ne se déconnecte, lors de la rotation de la console 6, du fait de la courte longueur de ce câble coaxial 44a.

On va maintenant décrire en détail la console 6 en référence aux figures 6a à 8b.

L'extrémité avant de l'arbre creux 57 est solidaire du châssis 91 de la console 6.

Un arceau 92 est fixé à l'arrière du châssis 91 pour servir de moyen guidage au câble coaxial 44a relié à l'antenne radar 90.

Le châssis 91 supporte un carter 93 qui comporte un couvercle 93a fixé de manière étanche par l'intermédiaire des joints d'étanchéité 94 un rebord d'extrémité dudit carter 93.

A l'intérieur du carter 93 est monté le motoréducteur de déplacement sélectif 84 qui comporte un arbre de transmission 84a relié à un boîtier de reprise de réduction 95 par l'intermédiaire d'un manchon d'accouplement 96.

Le motoréducteur 84 comporte des fiches de connexion électrique 84b vers l'avant pour son alimentation en énergie à partir du câble 3c ou d'une batterie d'accumulateur électrique de secours 84c, logée dans le carter 93.

Le motoréducteur 84 est solidairement lié au boîtier de reprise de réduction 95 par l'intermédiaire d'une platine incurvée 97 qui est maintenue en position par l'intermédiaire d'un ergot 98 qui fait saillie de la surface interne du couvercle 93a.

Le boîtier de reprise de réduction 95 est traversé par un arbre de réduction 99 qui présente à l'une de ses extrémités un levier 100 apte à tourner solidairement avec l'arbre de réduction 99 entre deux positions angulaires de butée définies par des microrupteurs 101, de manière à limiter la course angulaire de l'arbre de réduction 99.

Pour un soucis de clarté, on a représenté sur la figure 6a, le levier 100 dans un plan frontal, alors qu'en réalité, il est disposé de l'autre côté du boîtier de reprise de réduction 95, comme cela est clairement montré par la figure 6b.

L'autre extrémité de l'arbre de réduction 99 est solidairement logée dans une poulie de réduction 102 qui entraîne en rotation une poulie dentée 103 par l'intermédiaire d'une courroie sans fin 104.

Un arbre 105 entraîné en rotation par la poulie dentée 103 par l'intermédiaire d'une clavette 103a, est supporté de manière tournante par des paliers 106 sur le châssis 91.

Chaque extrémité de l'arbre 105 est solidaire d'un bras 107 apte à subir un déplacement circulaire, à l'extérieur des parois latérales du châssis 91 et dans un plan perpendiculaire à l'arbre 105.

Les bras 107 sont articulés à leur autre extrémité sur des bandes métalliques allongées 108.

Deux autres bras 109 analogues aux bras 107, disposés de chaque côté et à l'extérieur du châssis 91, sont articulés à l'une de leur extrémité sur la bande allongée 108 et à leur autre extrémité sur le châssis 91, de sorte que les bras 107 et 109 forment de chaque côté de la console 6 un parallélogramme déformable articulé autour d'axes perpendiculaires à l'axe longitudinal 7 et entraînés en translation circulaire par l'arbre 105.

Les bandes allongées 108 présentent à leurs extrémités longitudinales un rebord 110 qui fait perpendiculairement saillie vers l'intérieur par rapport au plan de chaque bande allongée 108. Ces rebords 110 sont percés d'un trou de guidage dans lequel peut coulisser une tige 111.

Chaque tige 111 présente à son extrémité inférieure une bride d'appui 111a apte à venir en butée sous les rebords 110.

Un plateau 112 est élastiquement supporté par des ressorts hélicoïdaux 113 intercalés entre les rebords 110 et des platines 114 solidaires du plateau 112, chaque tige 111 étant solidaire par son extrémité supérieure d'une platine 114, et pouvant coulisser axialement dans les ressorts hélicoïdaux 113.

Le plateau 112 est constitué de deux branches latérales 115 qui se prolongent à leurs extrémités longitudinales par des languettes verticales 116 solidaires des platines 114, les deux branches 115 étant reliées par des traverses 117.

Un patin 118 formant élément de protection mécanique perméable aux ondes électromagnétiques est fixé sur la face supérieure des platines 114 par l'intermédiaire de vis 119.

Le patin 118 frotte sur la paroi interne de la canalisation 2 pendant son exploration par l'antenne radar 90 et protège donc cette dernière de toute usure ou détérioration.

L'antenne radar 90 formant émetteur-récepteur est logée entre le plateau 112 et le patin de protection 118.

Des butées réglables 120 sont avantageusement montées sur le plateau 112 pour permettre un bridage optimal de l'antenne 90, au moyen également des vis 119.

Le patin 118 présente à sa périphérie des parois biseautées 118a de forme adaptée à la paroi circulaire intérieure de la canalisation 2.

Sur la figure 6a, l'antenne radard 90 est représentée en traits mixtes dans une position déployée.

Un tube allongé 121 est monté amovible par l'une de ses extrémités à l'avant du châssis 91.

Lorsque l'accès à une canalisation est trop étroit, il est possible de démonter le tube 121 par rapport à la console 6 pour réduire la longueur du chariot 1 et de le remonter à l'intérieur de la canalisation.

Le tube allongé 121 est relié par son autre extrémité à une première caméra 86a constituée d'un manchon tubulaire 122a et d'un hublot 123a. La filerie de transmission 3d de la caméra 86a traverse en partie le tube allongé 121 et vient se relier à un connecteur 124a monté sur le châssis 91.

Un deuxième connecteur 124b monté sur le châssis 91 est relié à un autre câble de transmission 3d qui vient se connecter à une deuxième caméra 86b et aux projecteurs 85a et 85b.

La première caméra 86a est rigidement liée au tube allongé 121 et dirigée vers l'avant du chariot, alors que la deuxième caméra 86b est dirigée vers l'arrière en direction de l'antenne radar 90.

La caméra 86b est montée de manière pivotante sur le tube 121 autour d'un axe 125b perpendiculaire à l'axe longitudinal 7 du chariot 1.

Les projecteurs 85b sont disposés de chaque côté de la caméra 86b et dirigés vers l'arrière de manière à éclairer l'antenne radar 90.

Le projecteur 85a est monté de manière pivotante autour d'un axe 125a parallèle à l'axe 125b sur l'extrémité avant de la caméra 86b de manière à éclairer la canalisation 2 vers l'avant.

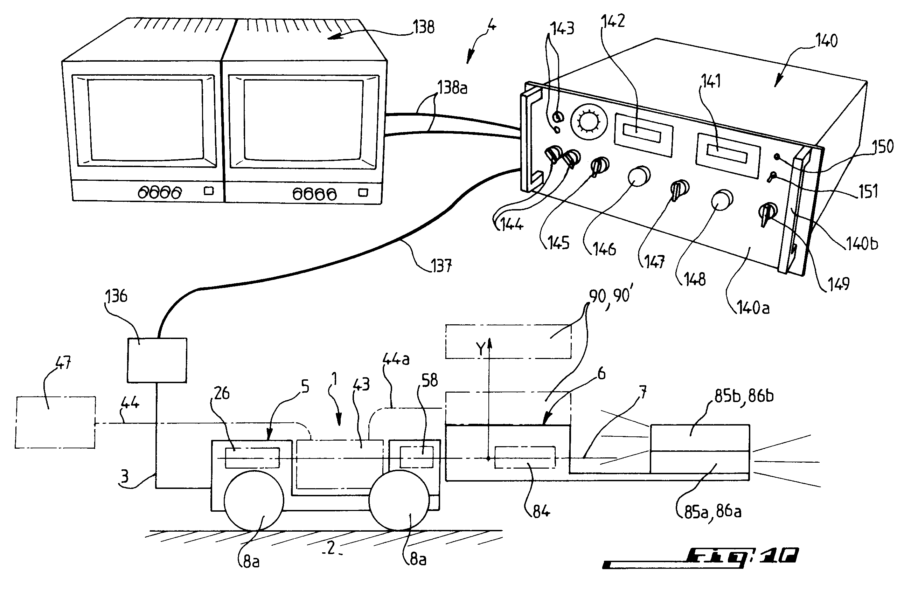

On a représenté sur les figures 8a et 8b un fil 3e reliant les projecteurs 85a et 85b entre eux.

L'inclinaison angulaire de la caméra 86b et des projecteurs 85b est déterminée de sorte que l'antenne radard 90 reste toujours dans leur champ de vision (matérialisé par des traits obliques sur les figures 8a et 8b) pendant son utilisation.

Les caméras 86a et 86b peuvent avantageusement comporter un objectif grand-angle ou panoramique dit "fish-eye".

La figure 9 représente un autre mode de réalisation de l'appareil de l'invention, dans lequel l'antenne radar 90 est remplacée par un organe vibratoire 90' formant marteau et d'un accéléromètre 126 qui sont montés sur le plateau 112 par l'intermédiaire d'une bride de fixation 127.

L'organe vibratoire 90' comporte une masselotte constituée d'un capteur de force 128 et d'une tête de protection 129 et une tige de guidage 130 fixée par son extrémité supérieure au capteur de force 128 et apte à coulisser axialement à l'intérieur d'une bague 131.

La bague 131 est solidairement logée dans un manchon de support 131a qui supporte une bobine 132 entourant l'organe vibratoire 90'.

Le capteur de force 128 est supporté élastiquement par la bague 131 par l'intermédiaire d'un ressort hélicoïdal 133 axialement traversé par la tige de guidage 130.

L'accéléromètre 126 est logé dans une chambre de découplage 134 rigidement reliée à un tube 135.

Un câble de transmission 44a' est connecté à l'accéléromètre 126 et à l'organe vibratoire 90'. Le câble 44a comporte un câble de liaison 126a avec l'accéléromètre 126, des fils d'alimentation non représentés de la bobine 132 et un câble de liaison 128a avec le capteur de force 128.

L'organe vibratoire 90' et l'accéléromètre 126 permettent de mesurer l'épaisseur des revêtements et/ou de la structure des canalisations, de détecter la présence de fissures ou de cavités dans les parois des canalisations à inspecter et d'apprécier la qualité de l'interface sol/structure.

Lorsque la bobine 132 est parcourue par un courant électrique adapté, la masselotte sort de son logement pour venir vibrer contre la paroi de la canalisation à inspecter.

Les vibrations sont transformées en signal électrique par le capteur de force 128 et ce signal est envoyé, via le câble 44'a, ou boîtier de traitement du signal 43 logé sur le chariot.

Dans le mode de réalisation particulier illustré sur la figure 9, le plateau 112 n'est pas équipé du patin 118.

On voit sur la figure 10 que le câble de transmission principal 3 est connecté par l'une de ses extrémités à l'arrière du chariot 1 et qu'il est enroulé par son autre extrémité sur un tambour de stockage 136 extérieur de la canalisation inspectée 2. Le tambour 136 comporte un dispositif compte-tours destiné à mesurer la distance parcourue par le chariot 1 lors de sa progression dans la canalisation (non représentée sur les dessins).

Le tambour de stockage 136 est relié par l'intermédiaire d'un câble 137 au système de commande et de contrôle 4.

Ce système de commande et de contrôle 4 comporte deux écrans télévisuels 138 pour l'affichage des informations vidéo transmises par les caméras 86a et 86b embarquées sur le chariot 1.

L'écran 138 qui est associé à la caméra 86a permet de contrôler la progression du chariot 1 et de détecter les éventuels obstructions ou effondrements de la canalisation inspectée 2.

L'écran 138 qui est associé à la caméra 86b permet de contrôler la position du dispositif d'exploration 90, 90' pendant son déplacement sélectif entre sa position rétractée et sa position déployée et surtout de s'assurer que le dispositif d'exploration 90, 90' reste en contact avec la paroi interne de la canalisation 2 pendant son exploration.

En effet, pour que les informations transmises par l'antenne radar 90 soient fiables, il est nécessaire que l'épaisseur de la couche d'air 139 séparant la face supérieure du patin 118 de la paroi interne de canalisation 2 reste constante pour ne pas fausser les informations transmises par l'antenne radar 90 (voir figure 7a).

Lorsque le patin 118 s'écarte accidentellement de la paroi interne de canalisation 2, par exemple suite au franchissement d'un raccord de canalisation, l'épaisseur de la couche d'air 139 varie et cette variation est détectée par la caméra 86b qui visualise le déplacement des tiges 111 formant capteurs reliées au patin 118.

On voit sur la figure 7b les tiges 111 qui font saillie sous les rebords 110 suite à un basculement du patin 118 autour d'un axe transversal.

La caméra 86b est inclinée dans une position telle qu'elle puisse visualiser au moins deux des quatre tiges coulissantes formant capteurs 111, lorsque le dispositif d'exploration 90, 90' est dans sa position déployée.

Les écrans 138 sont connectés à un appareil d'enregistrement vidéo non représenté sur le dessin.

Le système de commande et de contrôle 4 comprend un appareil principal 140 connecté d'une part aux écrans 138 par des câbles vidéo 138a et d'autre part au câble 137.

L'appareil 140 comporte sur sa face frontale un tableau de commande et de contrôle 140a. L'appareil 140 se présente sous la forme d'un tiroir, communément désigné par "rack", destiné à être logé dans une armoire formant baie, au moyen de poignées 140b disposées sur le tableau 140a.

Le tableau 140a comporte :
- un premier affichage numérique 141 à diodes électroluminescentes (LED) de l'angle de rotation de la console 6 par rapport à l'axe longitudinal 7 du chariot 1,
- un deuxième affichage numérique LED 142 de l'inclinaison angulaire transversale du corps principal 5 du chariot 1, par rapport à la verticale,
- deux boutons-poussoirs 143 destinés respectivement à mettre sous et hors tension l'appareil 140,
- deux boutons marche/arrêt servant à commander l'ouverture/fermeture de l'alimentation respectivement des caméras 86a et 86b et des projecteurs 85a et 85b,
- un bouton 145 à trois positions déterminées pour commander respectivement l'entraînement en translation vers l'arrière, l'arrêt et l'entraînement en translation vers l'avant du chariot mobile 1,
- un bouton de réglage 146 de la vitesse de translation du chariot 1,
- un bouton 147 à trois positions pour commander respectivement l'entraînement en rotation dans le sens horaire, l'arrêt et l'entraînement en rotation dans le sens trigonométrique de la console 6,
- un bouton de réglage 148 de la vitesse de rotation de la console 6 autour de l'axe longitudinal 7,
- un bouton 149 destiné à commander le déploiement ou la rétractation du plateau 112 à partir de la console 6,
- un voyant 150 allumé pour indiquer que la rétractation automatique du plateau 112 est opérationnelle, et
- un levier 151 destiné à commander la rétractation automatique du plateau 112 dans le cas par exemple d'une rupture des fils de commande du bouton 149 (voyant 150 éteint).

L'unité centrale 47 du dispositif d'exploration 90, 90' peut comporter un oscilloscope cathodique et un enregistreur sur bande magnétique des informations transmises (non représentés sur le dessin).

La console 6 peut être avantageusement pourvue d'une coiffe formant pare-chocs pour protéger le dispositif d'exploration 90, 90' pendant la descente du chariot dans une canalisation.

L'ensemble du chariot 1 est étanche aux fluides, comme en témoignent les différents joints montés sur ce dernier, et il est particulièrement résistant aux agents corrosifs susceptibles d'être rencontrés dans la canalisation et aux produits de nettoyage du chariot, tels que le karcher.

Le chariot de l'invention peut comporter par exemple les caractéristiques techniques suivantes :
- une vitesse de translation du chariot 1 variable de 0 à 15 m/mn,
- une vitesse de rotation de la console 6 autour de l'axe de rotation 7 variable de 0 à 2 tours/mn,
- une vitesse de translation du plateau 112 suivant l'axe Y lié à la console 6 environ égale à 20 mm par seconde,
- une vitesse de rétraction automatique suivant Y du plateau 112 sensiblement égale à 5 mm par seconde,
- une force de traction du chariot environ égale à 20ON,
- une masse du chariot sensiblement égale à 30 kg,
- une course maximale du plateau 112 suivant Y environ égale à 110 mm,
- une course angulaire maximale de la console 6 autour de l'axe de rotation 7 sensiblement égale à 370°,
- une course de translation verticale maximum du bâti 14 par rapport au plateau 15 sensiblement égale à 30 mm,
- des dimensions hors tout du chariot égales au maximum à 140 cm en longueur, 26 cm en largeur et 22 cm en hauteur.

Le fonctionnement de l'appareil de l'invention apparaît clairement à la lecture de la description qui précède.

Bien que l'invention ait été décrite en liaison avec un mode de réalisation particulier, il est bien évident qu'elle n'est nullement limitée et qu'on peut lui apporter des nombreuses variantes et modifications sans pour autant sortir de son cadre ni de son esprit.

## Revendications

1. Appareil d'inspection de l'état physique de canalisations non accessibles ou visitables par l'homme, notamment de réseaux d'assainissement, constitué d'un chariot mobile en translation dans une canalisation à inspecter, télécommandé de l'extérieur, notamment par l'intermédiaire de câbles de transmission, et qui comporte au moins une caméra et un projecteur dirigés vers l'avant du chariot pour visualiser des obstacles à sa progression et l'état général du collecteur, et un ensemble moteur pour entraîner notamment ledit chariot en translation, caractérisé en ce qu'une console (6), notamment en porte-à-faux, est montée rotative autour d'un axe longitudinal (7) à l'avant du chariot (1) et supporte un dispositif d'exploration (90, 90') sélectivement mobile entre une position rétractée sur ladite console (6) et une position déployée de contact avec la paroi interne de la canalisation à inspecter (2), ladite console étant pourvue d'un moyen de détection (85b ; 86b) pour détecter la position relative actuelle du dispositif d'exploration (90, 90'), notamment lorsqu'il est dans sa position déployée, et en ce que l'appareil d'inspection comporte un système extérieur (4) de commande et de contrôle du chariot (1) et une unité centrale (47) de traitement des informations transmises par le dispositif d'exploration (90,90').

2. Appareil selon la revendication 1, caractérisé en ce que le dispositif d'exploration est constitué d'une antenne de radar (90) de dimensions réduites amoviblement couverte par un élément de protection (118) mécanique perméable aux ondes électromagnétiques du côté de la paroi interne de la canalisation à inspecter (2).

3. Appareil selon la revendication 1, caractérisé en ce que le dispositif d'exploration est constitué d'un organe vibratoire (90'), tel qu'un marteau, et d'un accéléromètre (126), ledit organe vibratoire (90') comportant une masselotte (128, 129) apte à venir frapper la paroi interne de la canalisation (2), lorsque le dispositif d'exploration est dans sa position déployée.

4. Appareil selon l'une quelconque des revendications précédentes, caractérisé en ce que le moyen de détection est constitué d'au moins une deuxième caméra (86b) et un deuxième projecteur (85b) dirigés vers le dispositif d'exploration (90,90') de manière à pouvoir le visualiser sur au moins une portion de sa course incluant sa position déployée.

5. Appareil selon l'une quelconque des revendications précédentes, caractérisé par un moyen de déplacement sélectif du dispositif d'exploration (90, 90'), constitué de bras (107, 109) agencés en parallélogrammes articulés autour d'axes perpendiculaires audit axe longitudinal, pour rétracter et déployér le dispositif d'exploration (90, 90').

6. Appareil selon la revendication 5, caractérisé en ce que le dispositif d'exploration (90, 90') est logé sur un plateau (112) qui est supporté élastiquement, par exemple au moyen de ressorts hélicoïdaux (113) , par ledit moyen de déplacement sélectif.

7. Appareil selon la revendication 6, caractérisé en ce que le plateau (112) comporte des tiges (111) formant capteur qui font saillie de sa face inférieure de sorte que leur déplacement soit détecté au moins partiellement par ledit moyen de détection (85b, 86b).

8. Appareil selon l'une quelconque des revendications précédentes, caractérisé en ce que le chariot comprend un système à pendule (38) formant balancier permettant de mesurer l'inclinaison transversale du chariot (1) pendant son déplacement, par rapport à la verticale.

9. Appareil selon l'une quelconque des revendications précédentes, caractérisé en ce que ledit ensemble moteur comprend trois moteurs électriques (26, 58, 84) pour commander respectivement la locomotion du chariot (1), la rotation de la console (6) et le déplacement sélectif du dispositif d'exploration (90, 90').

10. Appareil selon la revendication 9, caractérisé en ce que la console est munie d'une batterie d'accumulateur électrique (84c) indépendante pour alimenter le moteur électrique (84) de commande en rétractation automatique du moyen de déplacement sélectif notamment lors d'une rupture accidentelle de l'alimentation générale (3) en énergie du chariot (1).

11. Appareil selon l'une quelconque des revendications précédentes, caractérisé en ce que le corps principal (5) du chariot est constitué de deux parties (5a, 5b) pouvant coulisser l'une par rapport à l'autre dans la direction longitudinale (7) du chariot.

12. Appareil selon l'une quelconque des revendications précédentes, caractérisé en ce que le chariot (1) comporte des butées mécaniques (69a) de fin de course pour limiter la rotation de la console (6) à environ un demi-tour de part et d'autre d'une position initiale prédéterminée de ladite console (6).

13. Appareil selon l'une quelconque des revendications précédentes, caractérisé en ce qu'il comporte des moyens de réglage (73) de la position verticale de l'arbre de rotation (57) de la console (6) par rapport au corps principal (5) du chariot (1).

14. Appareil selon l'une quelconque des revendications précédentes, caractérisé en ce qu'il comporte au moins un tambour (136) de stockage extérieur à la canalisation à inspecter (2), autour duquel vient s'enrouler le câble (3, 44) de transmission du chariot (1) et/ou du dispositif d'exploration (90,90'), un dispositif compte-tours étant monté sur au moins un tambour(136) pour mesurer la distance parcourue par le chariot (1) lors de sa progression dans la canalisation à inspecter (2).
